Europäisches Patentamt

European Patent Office

Office européen des brevets

(11) Veröffentlichungsnummer: **0 048 397**
**B1**

(12) **EUROPÄISCHE PATENTSCHRIFT**

(45) Veröffentlichungstag der Patentschrift: **03.04.85**

(21) Anmeldenummer: **81107115.8**

(22) Anmeldetag: **10.09.81**

(51) Int. Cl.⁴: **C 08 L 53/02, C 08 L 71/04**

(54) **Thermoplastische Formmassen.**

(30) Priorität: **20.09.80 DE 3035642**

(43) Veröffentlichungstag der Anmeldung:
**31.03.82 Patentblatt 82/13**

(45) Bekanntmachung des Hinweises auf die
Patenterteilung:
**03.04.85 Patentblatt 85/14**

(84) Benannte Vertragsstaaten:
**BE DE FR GB IT NL**

(56) Entgegenhaltungen:
**FR-A-2 240 935**
**US-A-4 256 853**

**Die Akte enthält technische Angaben, die nach
dem Eingang der Anmeldung eingereicht
wurden und die nicht in dieser Patentschrift
enthalten sind.**

(73) Patentinhaber: **BASF Aktiengesellschaft
Carl-Bosch-Strasse 38
D-6700 Ludwigshafen (DE)**

(72) Erfinder: **Brandstetter, Franz, Dr.
Ritterbuechel 45
D-6730 Neustadt (DE)**
Erfinder: **Echte, Adolf, Dr.
Leuschnerstrasse 42
D-6700 Ludwigshafen (DE)**
Erfinder: **Gausepohl, Hermann, Dr.
Neuweg 10
D-6704 Mutterstadt (DE)**
Erfinder: **Gerberding, Karl, Dr.
In der Dreispitz 9
D-6706 Wachenheim (DE)**
Erfinder: **Naarmann, Herbert, Dr.
Haardtblick 15
D-6719 Wattenheim (DE)**

Courier Press, Leamington Spa, England.

**Beschreibung**

Die Erfindung betrifft thermoplastische Formassen auf der Grundlage von Blockcopolymerisaten aus monovinylaromatischen Verbindungen und konjugierten Dienen und Polyphenylenethern.

Thermoplastische Massen, die sich zur Herstellung von Formteilen eignen und die Styrolpolymerisate und Polyphenylenether enthalten, sind z.B. aus den US-Patentanschriften 3 383 435, 4 128 602 sowie 4 128 603 bekannt. Solche Formmassen eignen sich zur Herstellung von Formteilen, die im Vergleich zu Formteilen aus schlagzäh modifizierten Styrolpolymerisaten eine bessere Wärmeformbeständigkeit haben. Auch sind Formassen aus Styrolpolymerisaten, Blockcopolymerisaten von Styrol und Butadien sowie Polyphenylenethern bekannt (US—PS 3 994 856). Dabei können die Blockpolymerisate vom linearen Typ, bestehend aus einem Styrolpolymerisat- und einem Butadienpolymerisatblock, sein, es können aber auch Dreier-Blockpolymerisate verwendet werder. Außerdem war es bekannt, hydrierte sternförmige Blockpolymerisate einzusetzen (DE—OS 27 50 242). Die Materialeigenschaften derartiger Formassen sind im allgemeinen zufriedenstellend, doch hat es sich gezeigt, daß diese Formmassen mitunter ungünstiges Verarbeitungsverhalten haben und daraus hergestellte Formteile mehr oder weniger trüb sind.

Der vorliegenden Erfindung lag daher die Aufgabe zugrunde, thermoplastische Formmasen auf der Grundlage von Blockcopolymerisaten aus monovinylaromatischen Verbindungen und konjugierten Dienen und Polyphenylenethern zu schaffen, die verbesserte Verarbeitungseigenschaften haben und die sich zu Formteilen mit hoher Transparenz verarbeiten lassen.

Diese Aufgabe wird erfindungsgemäß gelöst, wenn die Formmassen Blockcopolymerisate aus 60 bis 80 Gew.-% einer monovinylaromatischen Verbindung und 40 bis 20 Gew.% eines konjugierten Diens mit 4 bis 8 Kohlenstoffatomen enthalten, welche aufgebaut sind aus nichtelastomeren Polymersegmenten auf Basis der monovinylaromatischen Verbindung und aus elastomeren Polymersegmenten auf Basis des konjugierten Diens und welche hergestellt worden sind durch anionische Lösungspolymerisation der Monomeren mittels eines Monolithiumkohlenwasserstoffs als Initiator und anschließende Kupplung mit einem polyfunktionellen Kupplungsmittel, wobei die verzweigten Blockcopolymerisate im Durchschnitt eine Struktur nach einer der allgemeinen Formeln

$$(A^1\!\!-\!\!A^2\!\!-\!\!B\!\!\longrightarrow\!\!A^3)_n\!\!-\!\!X\!\!-\!\!(A^3\!\!\longleftarrow\!\!B\!\!-\!\!A^2)_m \qquad (I)$$

oder

$$(A^1\!\!-\!\!B\!\!\longrightarrow\!\!A^3)_n\!\!-\!\!X\!\!-\!\!(A^3\!\!\longleftarrow\!\!B)_m \qquad (II)$$

oder

$$(A^1\!\!-\!\!A^2\!\!-\!\!B)_n\!\!-\!\!X\!\!-\!\!(B\!\!-\!\!A^2)_m \qquad (III)$$

haben, worin

$A^1$, $A^2$ und $A^3$ nicht-elastomere Polymersegmente auf Basis der monovinylaromatischen Verbindung und

B elastomere Polymersegmente auf Basis des konjugierten Diens bedeuten,

n und m ganze Zahlen darstellen, wobei m gleich oder größer ist als n und die Summe von m und n mindestens 3 beträgt, und

X steht für den Rest des polyfunktionellen Kupplungsmittels, über den die die Verzweigungen bildenden Polymerblöcke an den Polymersegmenten $A^3$ bzw. B chemisch miteinander verknüpft sind,

mit den Maßgaben, daß im Falle der Formel I und II das oder die Polymersegmente $A^1$ 50 bis 80 Gew.-% und die Polymersegmente $A^2$ 1 bis 30 Gew.% und im Falle der Formel (I) die Polymersegmente $A^1$ und $A^2$ zusammen jedoch nicht mehr als 90 Gew.% der gesamten monovinylaromatischen Verbindung des verzweigten Blockcopolymerisates einpolymerisiert enthalten, der Übergang zwischen den Polymersegmenten $A^1$ bzw. $A^2$ und B scharf getrennt ist und der Übergang zwischen den Polymersegmenten B und $A^3$ allmählich erfolgt und daß im Falle der Formel (III) das oder die Polymersegmente $A^1$ 50 bis 80 Gew.% und die Polymersegmente $A^2$ 50 bis 20 Gew.% der gesamten monovinylaromatischen Verbindung des verzweigten Blockcopolymerisates einpolymerisiert enthalten.

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten oder Bahnen vorliegen.

Monovinylaromatische Verbindungen, die für den Aufbau der erfindungsgemäß zu verwendenden verzweigten Blockcopolymerisate in Betracht kommen, sind beispielsweise Styrol, die seitenkettenalkylierten Styrole, wie α-Methylstyrol, und die kernsubstituierten Styrole, wie Vinyltoluol oder Äthylvinylbenzol. Die monovinylaromatischen Verbindungen können dabei allein oder in Mischung miteinander eingesetzt werden. Vorzugsweise wird jedoch Styrol allein verwendet. Beispiele für konjugierte Diene, die erfindungsgemäß allein oder in Mischung miteinander für die Herstellung der verzweigten Blockcopolymerisate herangezogen werden können, sind Butadien, Isopren sowie 2,3-

2

Dimethylbutadien. Besonders günstig ist dabei Butadien oder Isopren, wobei wiederem Butadien bevorzugt wird.

Die verzweigten Blockcopolymerisate der Erfindung sollen insgesamt 60 bis 80 Gew.-% der monovinylaromatischen Verbindung und 40 bis 20 Gew.-% des konjugierten Diens, jeweils bezogen auf die insgesamt eingesetzten Monomeren, einpolymerisiert enthalten. Das Molekulargewicht der verzweigten Blockcopolymerisate liegt dabei in der Regel im Bereich von 100 000 bis 1 000 000 und beträgt vorzugsweise 150 000 bis 500 000. Bei diesen Angaben handelt es sich um das Gewichtsmittel des Molekulargewichts, bestimmt durch Viskositätsmessungen in Toluol bei 25°C.

Die verzweigten Blockcopolymerisate werden durch aufeinanderfolgende Polymerisation der Monomeren in Lösung in Gegenwart eines Monolithium-Kohlenwasserstoffs als Initiator unter stufenweiser Monomer- und Initiatorzugabe und anschließende Kupplung der erhaltenen lebenden linearen Blockcopolymerisate mit einer polyfunktionellen reaktionsfähigen Verbindung als Kupplungsmittel hergestellt. Blockcopolymerisate nach den Formeln (I), (II) und (III) sind bekannt. Einzelheiten ihrer Herstellung sind in der DE—OS 25 50 227 (=US—PS 4 167 545) Formel (I), DE—OS 25 50 226 (=US—PS 4 086 298) Formel (II) und in der DE—OS 19 59 922 (=US—PS 3 639 517) Formel (III) beschrieben.

Bei den Polyäthern handelt es sich um Verbindungen auf der Basis von in ortho-Position disubstituierten Polyphenylenoxiden, wobei der Äthersauerstoff der einen Einheit an den Benzolkern der benachbarten Einheit gebunden ist. Dabei sollen mindestens 50 Einheiten miteinander verknüpft sein. Die Polyäther können in ortho-Stellung zum Sauerstoff Wasserstoff, Halogen, Kohlenwasserstoffe, die kein α-ständiges tert. Wasserstoffatom besitzen, Halogenkohlenwasserstoffe, Phenylreste und Kohlenwasserstoff-oxi-Reste tragen. So kommen in Frage: Poly(2,6-dichlor-1,4-phenylen)-äther, Poly(2,6-diphenyl-1,4-phenylen)äther, Poly(2,6-dimethoxy-1,4-phenylen)äther, Poly(2,6-dimethyl-1,4-phenylen)äther, Poly(2,6-dibrom-1,4-phenylen)äther. Bevorzugterweise wird der Poly(2,6-dimethyl-1,4-phenylen)äther eingesetzt. Besonders bevorzugt sind Poly(2,6-dimethyl-1,4-phenylen)äther mit einer Grenzviskosität zwischen 0,45 und 0,65 dl/g (gemessen in Chloroform bei 30°C).

Die Polyphenylenäther können z.B. in Gegenwart von komplexbildenden Mitteln wir Kupferbromid und sek.-Dibutylamin aus den Phenolen hergestellt werden.

Die thermoplastischen Formmassen enthalten im allgemeinen 5 bis 95 Gew.-Teile des sternförmigen Blockcopolymerisates und 95 bis 5 Gew.-Teile an Polyphenylenäther. Bevorzugt sind solche Formmassen, worin 20 bis 80 Gew.-Teile sternförmiges Blockcopolymerisat und 80 bis 20 Gew.-Teile Polyphenylenäther enthalten sind. Außer den sternförmigen Blockcopolymerisaten und den Polyphenylenäthern können die Massen auch noch andere Zusätze, wie Styrolhomopolymerisate, schlagzähes Polystyrol, Farbstoffe oder Pigmente, Antioxidantien oder Gleitmittel enthalten. Diese Zusätze können in Mengen von 0,1 bis 5 Gew.-%, bezogen auf das Gemisch aus sternförmigem Blockcopolymerisat und Polyphenylenether in den Formmassen enthalten sein.

Die Herstellung der Formmassen erfolgt auf Vorrichtungen, die ein Mischen der Komponenten im thermoplastischen Zustand ermöglichen, wie auf Extrudern, Walzen oder Knetern.

Aus den erfindungsgemäßen Formmassen können Formkörper hergestellt werden, die im Vergleich zu solchen aus herkömmlichen Massen erhaltenen sich durch eine hohe Transparenz, eine hohe Wärmeformbeständigkeit, hohe Zähigkeit und geringe Sprödigkeit auszeichnen. Die erfindungsgemäßen Massen sind gut fließfähig.

Beispiele

Die in den Tabellen angegebenen Gew.-Teile an Blockcopolymerisat, an Poly-(2,6-dimethyl-1,4-phenylen)-äther und jeweils 0,8 Gew.-Teile Tris-(nonylphenyl)-phosphit werden auf einem Zweiwellen-Extruder bei 280°C aufgeschmolzen, homogenisiert und anschließend granuliert.

Aus dem Granulat werden mittels einer Spritzgußmaschine bei 280°C Prüfkörper hergestellt. Die Bruchenergien werden dabei nach DIN 53 443, Blatt 1 bei 23°C, der Erweichungspunkt nach Vicat nach DIN 53 460/B, und der Schmelzindex nach DIN 53 735 ermittelt.

Die sternförmigen Blockpolymerisate in den Beispielen 1 und 4 haben die allgemeine Formel (I) und sind nach Beispiel 1 der DE—OS 25 50 227 (=US—PS 4 167 545) hergestellt. Die Blockcopolymerisate in den Beispielen 3 und 5 haben die allgemeine Formel (II) und sind nach dem Beispiel 1 der DE—OS 25 50 226 (=US—PS 4 086 298) hergestellt. Das Blockpolymerisat nach Beispiel 2 hat die allgemeine Formel (III) und ist nach Beispiel 1 D der DE—AS 19 59 922 (=US—PS 3 639 517) hergestellt. In den Vergleichsbeispielen A und B liegt der Styrolgehalt der Blockcopolymerisate außerhalb des beanspruchten Bereichs. C ist ein lineares Zwei-Block-Copolymeres, D ein lineares Dreiblock-Copolymeres.

Die Ergebnisse sind in den Tabellen zusammengefaßt.

## TABELLE 1

| Beispiele (erfindungs-gemäß) | Sternförmiges Zusammensetzung [Gew.-Teile] Butadien | Styrol | Blockcopolymerisat Anteil in der Mischung [Gew.-Teile] | Poly(2,6-di-methyl-1,4-phenylen)-äther [1] [Gew.-Teile] | Erweichungs-punkt nach Vicat [°C] | Bruch-energie bei 23°C [Nm] | Schmelz-index 21,5 kp bei 280°C [g/10 min] | Trans-parenz |
|---|---|---|---|---|---|---|---|---|
| 1 | 25 | 75 | 75 | 25 | 102 | 3 | 12 | trans-parent |
| 2 | 25 | 75 | 65 | 35 | 111 | 4 | 6 | trans-parent |
| 3 | 28 | 72 | 75 | 25 | 97 | 5 | 10 | trans-parent |
| 4 | 32 | 68 | 75 | 25 | 103 | 10 | 8 | trans-parent |
| 5 | 32 | 68 | 55 | 45 | 122 | 12 | 3 | trans-parent |

[1] Poly(2,6-dimethyl-1,4-phenylen)äther mit einer Grenzviskosität von 0,48 dl/g (gemessen in Chloroform bei 30°C).

## TABELLE 2

| Vergleichs-versuche (nicht er-findungs-gemäß) | Blockcopolymerisat Zusammensetzung [Gew.-Teile] Butadien | Styrol | Aufbau | Anteil in der Mi-schung [Gew.-Teile] | Poly(2,6-di-methyl-1,4-phenylen)-äther [1] [Gew.-Teile] | Erwichungs-punkt nach Vicat [°C] | Bruch-energie bei 23°C [Nm] | Schmelz-index 21,6 kp bei 280°C [g/10 min] | Trans-parenz |
|---|---|---|---|---|---|---|---|---|---|
| A | 15 | 85 | stern-förmig | 75 | 25 | 105 | 0,2 | 15 | trans-parent |
| B | 50 | 50 | stern-förmig | 75 | 25 | 60 | 11,5 | 1 | opak |
| C | 32 | 68 | S—B [2] | 75 | 25 | 108 | 0,3 | 2 | trans-parent |
| D | 25 | 75 | S—B—S [2] | 65 | 35 | 111,5 | 1,3 | 3 | trans-parent |

[1] Poly(2,6-dimethyl-1,4-phenylen)äther mit einer Grenzviskosität von 0,48 dl/g (gemessen in Chloroform bei 30°C).
[2] S=Styrol
B=Butadien.

**0 048 397**

**Patentanspruch**

Thermoplastische Formmassen auf der Grundlage von Blockcopolymerisaten aus monovinylaromatischen Verbindungen und konjugierten Dienen und Polyphenylenäthern, dadurch gekennzeichnet, daß sie Blockcopolymerisate aus 60 bis 80 Gew.% einer monovinylaromatischen Verbindung und 40 bis 20 Gew.% eines konjugierten Diens mit 4 bis 8 Kohlenstoffatomen enthalten, welche aufgebaut sind aus nichtelastomeren Polymersegmenten auf Basis der monovinylaromatischen Verbindung und aus elastomeren Polymersegmenten auf Basis des konjugierten Diens und welche hergestellt worden sind durch anionische Lösungspolymerisation der Monomeren mittels eines Monolithiumkohlenwasserstoffs als Initiator und anschließende Kupplung mit einem polyfunktionellen Kupplungsmittel, wobei die verzweigten Blockcopolymerisate im Durchschnitt eine Struktur nach einer der allgemeinen Formeln

$$(A^1\!-\!A^2\!-\!B\!\longrightarrow\!A^3)_n\!-\!X\!-\!(A^3\!\longleftarrow\!B\!-\!A^2)_m \qquad\qquad \text{(I)}$$

oder

$$(A^1\!-\!B\!\longrightarrow\!A^3)_n\!-\!X\!-\!(A^3\!\longleftarrow\!B)_m \qquad\qquad \text{(II)}$$

oder

$$(A^1\!-\!A^2\!-\!B)_n\!-\!X\!-\!(B\!-\!A^2)_m \qquad\qquad \text{(III)}$$

haben, worin

$A^1$, $A^2$ und $A^3$ nicht-elastomere Polymersegmente auf Basis der monovinylaromatischen Verbindung und

B elastomere Polymersegmente auf Basis des konjugierten Diens bedeuten,

n und m ganze Zahlen darstellen, wobei m gleich oder größer ist als n und die Summe von m und n mindestens 3 beträgt, und

X steht für den Rest des polyfunktionellen Kupplungsmittels, über den die die Verzweigungen bildenden Polymerblöcke an den Polymersegmenten $A^3$ bzw. B chemisch miteinander verknüpft sind.

mit den Maßgaben, daß im Falle der Formel (I) und (II) das oder die Polymersegmente $A^1$ 50 bis 80 Gew.-% und die Polymersegmente $A^2$ 1 bis 30 Gew.-% und im Falle der Formel (I) die Polymersegmente $A^1$ und $A^2$ zusammen jedoch nicht mehr als 90 Gew.% der gesamten monovinylaromatischen Verbindung des verzweigten Blockcopolymerisates einpolymerisiert enthalten, der Übergang zwischen den Polymersegmenten $A^1$ bzw. $A^2$ und B scharf getrennt ist und der Übergang zwischen den Polymersegmenten B und $A^3$ allmählich erfolgt und daß im Falle der Formel (III) das oder die Polymersegmente $A^1$ 50 bis 80 Gew.% und die Polymersegmente $A^2$ 50 bis 20 Gew.% det gesamten monovinylaromatischen Verbindung des verzweigten Blockcopolymerisates einpolymerisiert enthalten.

**Revendication**

Matières à mouler thermoplastiques à base de copolymères à blocs de composés monovinyl-aromatiques et de diènes conjugués et de poly(éthers de phénylène), caractérisées en ce qu'elles contiennent des copolymères à blocs formés de 60 à 80 % en poids d'un composé monovinyl-aromatique et de 40 à 20 % en poids d'un diène conjugué en $C_4$ à $C_8$ et constitués de segments polymères non élastomères à base du composé monovinyl-aromatique et de segments polymères élastomères à base du diène conjugué, qui ont été préparés par une polymérisation anionique en solution en présence d'un hydrocarbure mono-lithié comme amorceur, suivie d'une copulation avec un agent de copulation polyfunctionnel, les copolymères à blocs ramifiés possédant en moyenne une structure de l'une des formules générales

$$(A^1\!-\!A^2\!-\!B\!\longrightarrow\!A^3)_n\!-\!X\!-\!(A^3\!\longleftarrow\!B\!-\!A^2)_m \qquad\qquad \text{(I)}$$

$$(A^1\!-\!B\!\longrightarrow\!A^3)_n\!-\!X\!-\!(A^3\!\longleftarrow\!B)_m \qquad\qquad \text{(II)}$$

ou

$$(A^1\!-\!A^2\!-\!B)_n\!-\!X\!-\!(B\!-\!A_2)_m \qquad\qquad \text{(III)}$$

dans lesquelles

$A^1$, $A^2$, et $A^3$ représentent des segments polymères non élastomères à base du composé monovinylaromatique

B désigne les segments polymères élastomères à base du diène conjugué,

n et m sont des nombres entiers avec $m \geqslant n$ et m+n=au moins 3 et

X représente le reste de l'agent de copulation polyfonctionnel, à l'aide duquel les blocs du polymère formant les ramifications sont couplés chimiquement aux segments polymères $A^3$ ou B,

5

**0 048 397**

avec les conditions que, dans le cas de la formule (I) et de la formule (II), 50 à 80 % en poids du composé monovinyl-aromatique, contenu dans le copolymère à blocs ramifié, sont copolymérisés dans le ou les segments polymères $A^1$, tandis que 1 à 30 % en poids le sont dans les segments polymères $A^2$, sand que la proportion globale dans les segments polymères $A^1$ et $A^2$ ne dépasse 90 % du poids total du composé monovinyl-aromatique, que le passage des segments polymères $A^1$ et (ou) $A^2$ aux segments B est net, tandis que le passage des segments polymères B aux segments polymères $A^3$ est progressif, et que, dans le cas de la formule (III), 50 à 80 % en poids du composé monovinyl-aromatique sont copolymérisés sans le ou les segments polymères $A^1$ et 50 à 20 % en poids de la totalité du composé monovinyl-aromatique dans le copolymère à blocs ramifié sont copolymérisés dans les segments polymères $A^2$.

**Claim**

A thermoplastic molding material based on block copolymers of monovinyl-aromatic compounds and conjugated dienes and on polyphenylene ethers, which contains block copolymers of from 60 to 80% by weight of a monovinyl-aromatic compound and from 40 to 20% by weight of a conjugated diene of 4 to 8 carbon atoms, which block copolymers are made up of non-elastomeric polymer segments based on the monovinyl-aromatic compound and of elastomeric polymer segments based on the conjugated diene and have been prepared by anionic solution polymerisation of the monomers by means of a monolithium-hydrocarbon initiator followed by coupling with a polyfunctional coupling agent, the branched block copolymers having an average structure conforming to the general formula

$$(A^1\text{---}A^2\text{---}B\text{-----}\!\!\rightarrow\! A^3)_n\text{---}X\text{---}(A^3\!\leftarrow\!\text{-----}B\text{---}A^2)_m \qquad\qquad (I)$$

or

$$(A^1\text{---}B\text{-----}\!\!\rightarrow\! A^3)_n\text{---}X\text{---}(A^3\!\leftarrow\!\text{-----}B)_m \qquad\qquad (II)$$

or

$$(A^1\text{---}A^2\text{---}B)_n\text{---}X\text{---}(B\text{---}A^2)_m \qquad\qquad (III)$$

where

$A^1$, $A^2$ and $A^3$ are non-elastomeric polymer segments based on the monovinyl-aromatic compound,

B is an elastomeric polymer segment based on the conjugated diene,

n and m are integers, m being equal to or greater than n and the sum of m and n being not less than 3, and

X is the radical of the polyfunctional coupling agent by means of which the polymer blocks which form the branches are linked chemically to one another at the polymer segments $A^3$ or B,

with the provisos that in the case of formula I and formula II the polymer segment or segments $A^1$ contain from 50 to 80% by weight and the polymer segments $A^2$ contain from 1 to 30% by weight, but in the case of formula (I) the polymer segments $A^1$ and $A^2$ together do not contain more than 90% by weight, of the total monovinyl-aromatic compound of the branched block copolymer as copolymerized units, that the transition between the polymer segments $A^1$ or $A^2$ and B is sharp and the transition between the polymer segments B and $A^3$ is gradual, and that in the case of formula (III) the polymer segment or segments $A^1$ contain from 50 to 80% by weight and polymer segments $A^2$ contain from 50 to 20% by weight of the total monovinyl-aromatic compound of the branched block copolymer as copolymerized units.

6